# EUROPÄISCHE PATENTSCHRIFT

(11) **EP 1 197 730 B1**
(45) Veröffentlichungstag und Bekanntmachung des Hinweises auf die Patenterteilung: **03.10.2007**
(21) Anmeldenummer: 01890252.8
(22) Anmeldetag: 30.08.2001
(51) Int. Cl.: G01C 5/04

(54) **Verfahren zum Bestimmen von Längsprofilen und Vorrichtung zum Durchführen des Verfahrens**
Method for determining longitudinal profiles and device therefor
Procédé pour déterminer des profils longitudinaux et dispositif pour mettre en oeuvre le procédé

(30) Priorität: 12.10.2000 AT 17472000
(43) Veröffentlichungstag der Anmeldung: 17.04.2002
(73) Patentinhaber: Taferner, Marko, 9373 Klein St. Paul (AT)
(72) Erfinder: Taferner, Marko, 9373 Klein St. Paul (AT)
(74) Vertreter: Beer, Manfred

(56) Entgegenhaltungen:
- DE-A1- 2 810 687
- DE-U1- 20 005 719
- US-A- 4 878 297

## Beschreibung

Die Erfindung betrifft ein Verfahren zum Bestimmen von Längsprofilen mit den Merkmalen des einleitenden Teils von Anspruch 1.

Unter "Längsprofil" wird im vorliegenden die Lage und der Höhen-Verlauf von Bauwerken, wie Rohren, bezüglich einer horizontalen Ebene verstanden.

Beispielsweise sollen unterirdisch verlegte Rohrleitungen, in denen ein nicht unter Druck stehendes Medium transportiert wird (Kanalrohre, Drainagerohre) ein gleichmäßiges Gefälle aufweisen, damit ein einwandfreier Transport des Mediums unter der Wirkung der Schwerkraft gewährleistet ist. Je schwieriger die Gefällsbedingungen eines derartigen Rohrsystems sind (z.B. flaches Gelände), desto wichtiger ist nicht nur das Durchschnittsgefälle, sondern auch das Erfordernis, dass das Gefälle über den Verlauf der ganzen Rohrleitung einheitlich und konstant ist, also keine Ausbauchungen in vertikaler Richtung auftreten.

Das Gefälle einer Rohrleitung, also deren "Längsprofil" kann am offenen Rohrgraben ohne weiteres beurteilt werden.

Nach dem der Rohrgraben verschüttet worden ist, können insbesondere bei nicht einwandfreier Rohrbettung, bei schwierigen Untergrundverhältnissen im setzungsgefährdeten Gelände und/oder durch zeitbedingte oder unvorhersehbare Belastungen von der Oberfläche her erhebliche Abweichungen des Gefälles der Rohrleitung ("Längsprofil") vom Idealgefälle (ideales oder gewünschtes Längsprofil) auftreten, welche die Funktion und Haltbarkeit des verlegten Rohrstranges negativ beeinflussen.

Es ist daher erforderlich, das Gefälle von Rohrleitungen von Zeit zu Zeit zu überprüfen, was insbesondere bei Abwasserhauptsträngen, Kanalhausanschlüssen, Abwassersystemen bei Tankstellen und Fabriken, in die Öl- oder Fettabscheider eingebaut sind, bei Drainagesystemen von Mülldeponien wesentlich und auch bei der Kollaudierung von neu verlegten Abwasserkanälen wichtig ist. Auch bei in Deponien verlegten Leitungen, die für das Sammeln und das Ableiten von Deponiegasen bestimmt sind, ist ein bestimmtes Gefälle wesentlich.

Für die Prüfung des Gefälles von Rohrleitungen wurden bislang Messgeräte verwendet, welche die durchschnittliche Rohrneigung mit Hilfe von Laserstrahlen ermitteln.

Auch Neigungsmesser in Kombination mit Kanal-TV-Kameras sind ungenau und lassen keine exakten Vergleichsmessungen in längeren Zeitabständen zu.

Ein Verfahren mit den Merkmalen des einleitenden Teils von Anspruch 1 ist aus der DE 28 10 687 bekannt. Die DE 28 10 687 A beschreibt ein Verfahren und eine Vorrichtung zum Prüfen der Lage von im Boden verlegten Rohren. Bei der bekannten Vorrichtung ist für die Prüfung der Lage eines Rohres ein Messkopf vorgesehen, der mit einer flexiblen, mit einer Flüssigkeit gefüllten Schlauchleitung verbunden ist. Die Schlauchleitung reicht bis in einen Messwagen, in dem Mess- und Registriergeräte untergebracht sind. Im Messkopf ist bei der Vorrichtung gemäß der DE 28 10 687 A ein Druckaufnehmer vorgesehen, dessen Druckraum über die Schlauchleitung mit einem Vorratsbehälter mit relativ großem Volumen verbunden ist. Beim Benützen der aus der DE 28 10 687 A bekannten Vorrichtung wird der Messkopf zunächst in das zu vermessende Rohr eingeschoben und dann wieder aus dem Rohr herausgezogen. Vor dem Herausziehen wird der Ausgangswert des auf den Druckaufnehmer über die Schlauchleitung wirkenden, hydrostatischen Drucks beim Herausziehen gemessen und es werden Änderungen des Drucks erfasst. Irgendwelche Korrekturen des Messergebnisses, unter Berücksichtigung von Luftdruck oder Temperatur sind in der DE 28 10 687 A nicht erwähnt.

Aufgabe der Erfindung ist es, ein Verfahren anzugeben, mit dem mit hoher Genauigkeit (bevorzugt im Millimeterbereich) das Längsprofil, also die Lage von (langgestreckten) Bauwerken (beispielsweise von unterirdisch verlegten Rohren) bezüglich einer Horizontalebene bestimmt werden kann.

Gelöst wird diese Aufgabe mit einem Verfahren, das die Merkmale des unabhängigen Verfahrensanspruches aufweist.

Die Erfindung betrifft auch eine Vorrichtung zum Durchführen des Verfahrens zur Verfügung, welche die Merkmale des Vorrichtungshauptanspruches aufweist. Eine Vorrichtung mit den Merkmalen des einleitenden Teils von Anspruch 10 ist ebenfalls aus der DE 28 10 687 A bekannt.

Bevorzugte und vorteilhafte Ausgestaltungen des erfindungsgemäßen Verfahrens und der erfindungsgemäßen Vorrichtung sind Gegenstand der abhängigen Unteransprüche.

Der grundsätzliche Gedanke des erfindungsgemäßen Verfahrens beruht auf der Auswertung von Messungen des hydrostatischen Druckes in einer Flüssigkeitssäule, wenn das untere Ende dieser Säule entlang einem ansteigenden oder fallenden Abschnitt eines Bauwerkes, z.B. einer Rohrleitung, bewegt wird. Auf Grund der in über die Länge des Bauwerkes, vorzugsweise gleichmäßig, verteilten Meßpunkten gemessenen Werte für den hydrostatischen Druck, kann der Höhenabstand, also der lotrecht gemessene Abstand, zwischen dem jeweiligen Messpunkt und einem Bezugspunkt ermittelt und so der Höhen-Verlauf (Längsprofil), z.B. Gefälle, von Bauwerken, insbesondere von unterirdisch verlegten Einbauten, wie Kanalrohren, Leitungen usw., ermittelt werden.

Anwendungsmöglichkeiten des erfindungsgemäßen Verfahren und der erfindungsgemäßen Vorrichtung sind beispielsweise die folgenden:
- Erfassen des Verlaufes von neu verlegten und alten Abwasserkanälen. Das ermöglicht ein genaues Überprüfen der Verlegung von Kanalrohren und eine Beurteilung der Funktionsfähigkeit von neuen und alten Abwassersystemen.
- Erfassen und laufendes Kontrollieren von Drainagesystemen bei Mülldeponien. Das Aufschütten von Müll kann durch Druckbelastung die Funktionsfähigkeit des Drainagesystems nachteilig beeinflussen, da es zu Setzungen in den Drainage-Rohrleitungen (Leitungen für Flüssigkeiten und/oder Deponiegase) kommen kann. Eine ständige Kontrolle ist demnach erforderlich und ermöglicht eine höhere Aufschüttung, wenn die Stabilität des Untergrundes nachgewiesen werden kann.

Mit Hilfe des erfindungsgemäßen Verfahrens kann das Setzungsverhalten von Bahn- und Strassentrassen und sonstigen Aufschüttungen, die insbesondere bei problematischen Untergrundverhältnissen einen Risikofaktor darstellen, ständig überprüft werden.
- Überall dort, wo es notwendig ist, einen Rohrvortrieb millimetergenau zu positionieren (Hausanschlüsse, Kabelunterführungen, Düker usw.) und dessen Verlauf (insbesondere Horizontalverlauf) genau zu kennen, kann dies mit dem erfindungsgemäßen Verfahren und der erfindungsgemäßen Vorrichtung ausgeführt werden.
- Mit Hilfe des erfindungsgemäßen Verfahrens und der erfindungsgemäßen Vorrichtung können auch Hangrutschungen beobachtet und kontrolliert werden, bevor diese an der Oberfläche sichtbar werden.
- Mit Hilfe des erfindungsgemäßen Verfahrens und der erfindungsgemäßen Vorrichtung können auch Hausanschlüsse punktgenau vermessen werden, insbesondere im städtischen Bereich und bei grablosen Verfahren.

Insgesamt eröffnet das erfindungsgemäße Verfahren die Möglichkeit auch unterirdische Bewegungen des Bodens, insbesondere Bodensetzungen zu erfassen und genau zu vermessen.

Das erfindungsgemäße Verfahren zum Bestimmen von Längsprofilen arbeitet grundsätzlich mit der Verwertung des Drucks, den eine Flüssigkeitssäule auf einen entlang des zu vermessenden Bauwerkes (Kanalrohr usw.) bewegten Drucksensor (Messsonde) ausübt. Um die Genauigkeit der Messung zu erhöhen, wird gemäß der Erfindung bei der Auswertung der vom Drucksensor erfassten Druckmesswerte auch der jeweils herrschende Atmosphärendruck mitberücksichtigt. Zusätzlich kann, um temperaturbedingte Änderungen der Dichte der Flüssigkeit in der Flüssigkeitssäule zu berücksichtigen, die Temperatur im Drucksensor, die Temperatur der Flüssigkeit und/oder die Temperatur der Umgebungsluft erfasst und beim Ermitteln der Messergebnisse berücksichtigt werden.

Ein besonders genaues und reproduzierbares Messergebnis kann erzielt werden, wenn auch
a) die Temperatur bei der Messsonde (die z.B. in einem zu vermessenden Kanal angeordnet ist),
b) die Temperatur im noch nicht im Kanal befindlichen Schlauch und/oder
c) die Temperatur der Umgebungsluft gemessen und beim Auswerten der Messergebnisse berücksichtigt wird.

Auf diese Weise wird nicht nur der atmosphärische Druck, sondern auch die tatsächliche Dichte der Flüssigkeit in der Schlauchleitung, an deren Ende sich der Drucksensor befindet, berücksichtigt, wenn der hydrostatische Druck zur Bestimmung des Höhenstandes zwischen dem Messpunkt und dem Referenzpunkt ausgewertet wird.

Es ist in einer Ausführungsform der Erfindung vorgesehen, dass man mit einer Kombination von mehreren Messungen, wie atmosphärischer Druck, Temperatur (der Flüssigkeit in der Flüssigkeitssäule) und/oder hydrostatischer Druck, arbeitet, um ein genaues Messergebnis, das beispielsweise eine Genauigkeit von 1 mm/Messung hat, zu erzielen.

Mit der erfindungsgemäßen Vorrichtung, die im Prinzip ein (elektronisches) Absolut-Druckmanometer ist, können Höhenabstände mit Hilfe des hydrostatischen Druckes einer Flüssigkeitssäule erfasst werden. Hiezu wird das Gewicht, das die Flüssigkeitsteile auf Grund des momentanen Höhenabstandes, also der lotrecht gemessenen Höhe zwischen Messpunkt und Referenzpunkt, im Zeitpunkt der Messung besitzt, mit Hilfe eines Drucksensors erfasst und zur Ermittlung des Höhenabstandes verwertet. Der Referenzpunkt der Flüssigkeitssäule befindet sich am oberen Ende der Flüssigkeitssäule, wobei bevorzugt ist, dass an dem oberen Ende des Mess-Schlauches, in dem sich die Flüssigkeitssäule befindet, ein Ausgleichsgefäß vorgesehen ist. Wenn ein Ausgleichsgefäß vorgesehen ist, bleiben Änderungen des oberen Pegels der Flüssigkeitssäule klein, auch wenn sich der Querschnitt und/oder die Länge des Mess-Schlauches, in dem sich die Flüssigkeitssäule befindet, beim Weiterbewegen der Meßsonde von Meßpunkt zu Meßpunkt ändert.

Da das Ausgleichsgefäß offen ist, wird beim Auswerten der Messung des hydrostatischen Drucks auch der Luftdruck berücksichtigt. Hiezu ist bei der erfindungsgemäßen Vorrichtung ein Drucksensor zum Erfassen des Umgebungsluftdruckes (Atmosphärendruck) vorgesehen. Dieser den Atmosphärendruck erfassende Sensor ist beispielsweise und bevorzugt in der Nähe des Ausgleichsgefäßes angeordnet.

Beim Arbeiten nach dem erfindungsgemäßen Verfahren und mit der erfindungsgemäßen Vorrichtung kann beispielsweise wie folgt vorgegangen werden, wobei die nachfolgende Beschreibung am Beispiel des Bestimmens des Längsprofiles eines Kanalrohres gegeben wird:

Vor dem Bestimmen des Längsprofils des Kanalrohres wird der Kanal gereinigt, beispielsweise mit Hilfe eines Kanalspülwagens, damit sichergestellt ist, dass die Messsonde, die beim erfindungsgemäßen Verfahren verwendet wird, auf der Rohrsohle und nicht auf dort befindlichen Ablagerungen liegt und tatsächlich entlang der Rohrsohle bewegt wird.

Nach dem Reinigen des Kanals wird dieser z.B. mit Hilfe einer Kanal-TV-Anlage überprüft. Wenn sich die zu überprüfende Rohrleitung in gereinigtem Zustand befindet, kann die Kanal-TV-Anlage aus dem Kanal entfernt werden, wobei es möglich ist, gleichzeitig in den Kanal eine Schnur für das Bewegen der erfindungsgemäßen Sonde zum ersten Messpunkt einzuziehen.

Nun wird ein Fahrzeug ("Meßwagen"), auf dem die Vorrichtung zum Durchführen des Verfahrens aufgebaut sein kann, vor dem einen Kanalschacht in Stellung gebracht und die Schlauchleitung so weit wie erforderlich, von der Schlauchkassette (Schlauchvorrat beispielsweise 250 m) abgezogen und mit einem kalibrierten Justierrohr justiert. Am anderen (oberen) Ende der Schlauchleitung befindet sich ein Ausgleichsbehälter dessen Entlüftungsschraube und Ventil geöffnet wird. Mit diesem Vorgang wird das Messsystem für die Eigenkontrolle justiert. Dann wird bei geöffnetem Schachtdeckel die (vorher eingebrachte) Schnur an der Messsonde befestigt und die Messonde mit dem Messschlauch in das Kanalrohr gezogen, wobei der Mess-Schlauch über Umlenkrollen im Schacht und am Messfahrzeug geführt werden kann. Das Ausziehen bzw. Einziehen des Messschlauches kann durch einen motorischen Antrieb unterstützt werden. Die Meßsonde wird am ersten Meßpunkt positioniert und der Meßwert (der hydrostatische Druck der Messflüssigkeit) wird nach der Stabilisierung (Beruhigung) der Meßflüssigkeit als Ausgangswert für alle weiteren Messungen hergenommen und abgespeichert. Danach kann mit den weiteren Meßvorgängen begonnen werden. Hiezu wird, gegebenenfalls unterstützt durch eine motorisch angetriebene Schlauchrückholung, der Mess-schlauch ein Stück weit eingezogen und die Messsonde im nächsten Messpunkt positioniert. Hiezu kann an der Schlauchkassette eine automatische Längenmessvorrichtung für den Messschlauch vorgesehen sein, so dass beispielsweise Messungen in Abständen von einem Meter durchgeführt werden.

Nach dem Weiterziehen der Messsonde ist es zweckmäßig, vor jeder Messung eine Beruhigungsphase abzuwarten, in der sich die Messflüssigkeit im Messschlauch beruhigt, damit ein stabiler Wert erreicht werden kann. Diese Beruhigungsphase kann abhängig unter anderem von dem Höhenunterschied zwischen Messsonde und Ausgleichsbehälter etwa 15 bis 45 s betragen.

Die Messungen werden so oft wiederholt, bis die Messsonde das Ende der zu überprüfenden Strecke erreicht hat.

Anzumerken ist, dass die Korrektur der vom Drucksensor in der Mess-sonde gemessenen Werte für den hydrostatischen Druck durch Einbeziehen des Atmosphärendruckes, der Umgebungstemperatur, der Temperatur im Bereich im Bereich der Messsonde und/oder der Temperatur Flüssigkeit im Bereich des Schlauchvorrates mit Hilfe eines Rechnerprogrammes durchgeführt werden kann, so dass bei jeder Messung ohne zusätzliche Maßnahmen der richtige Wert für den Höhenabstand des Messpunktes vom Referenzpunkt aus dem von der Messsonde gemessenen hydrostatischen Druck der Flüssigkeitssäule erhalten wird.

Da auf der erfindungsgemäßen Vorrichtung ein Schlauchpaket als Vorrat für den Messschlauch vorgesehen ist, besteht die Möglichkeit Schlauchpakete mit unterschiedlicher Länge zu verwenden. Beispielsweise können Schlauchpakete mit 250 m Länge oder Schlauchpakete mit 60 m Länge verwendet werden. Beim Auswerten der von der Drucksensor in der Messsonde erfassten, hydrostatischen Drucks wird auch die Länge des Schlauchpaketes mitberücksichtigt. Dies erfolgt beispielsweise so, dass die Länge der Messstrecke und die Schachttiefe berücksichtigt werden. Damit wird Folgendes berücksichtigt. Beispielsweise wird im Jänner bei einer Außentemperatur von -15°C eine Messung in einer Sickerwasser-Rohrleitung in einer Mülldeponie vorgenommen, die selbst eine Temperatur von +80°C hat. Dies ergibt einen Temperaturunterschied von 95°C. Das Schlauchpaket hat eine Länge von 250 m, die Prüfstrecke beträgt 50 m, die Schachttiefe 5 m. Das bedeutet, dass von den 250 m des Schlauchpaketes 55 m eine Temperatur von +80°C und 195 m eine Temperatur von -15°C haben. Das heißt, dass die Dichte der Flüssigkeit im Messschlauch unterschiedlich ist. Auch solche temperaturbedingten Dichteunterschiede können durch das Rechenprogramm beim Auswerten des vom Drucksensor in der Messsonde erfassten, hydrostatischen Drucks berücksichtigt werden.

Bei der erfindungsgemäßen Vorrichtung kann als Messflüssigkeit Wasser verwendet werden, dem zwecks Senkung des Gefrierpunktes ein Gefrierschutzmittel, wie eine hochsiedende, wasserlösliche, (schwer entflammbare) organische Flüssigkeit, wie ein Glykol, z.B. Ethylenglykol, zugesetzt worden ist. Eine Messflüssigkeit mit zugesetztem Gefrierschutzmittel hat noch den Vorteil, dass sich ihre Dichte mit sich ändernder Temperatur weitgehend linear ändert.

Nachstehend wird unter Bezugnahme auf die angeschlossenen Zeichnungen ein Ausführungsbeispiel für eine Vorrichtung zum Durchführen des erfindungsgemäßen Verfahrens beschrieben. Es zeigt:

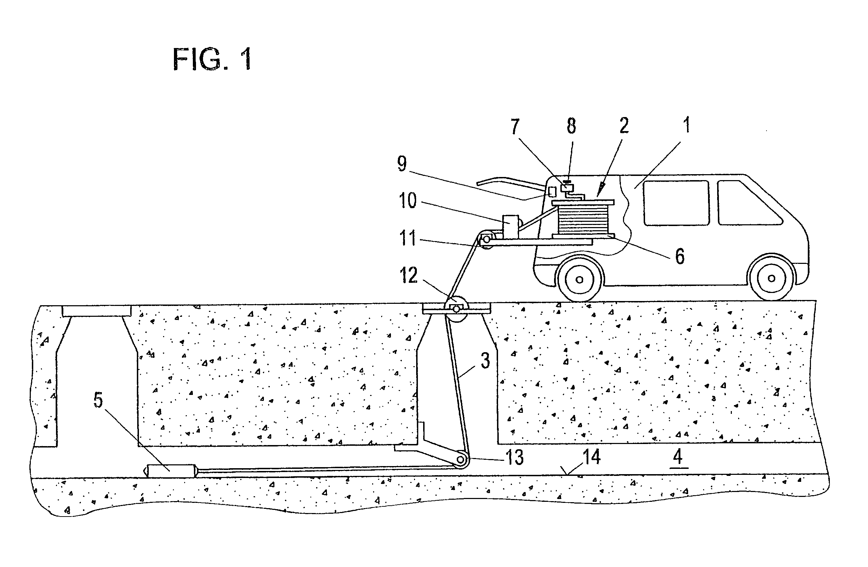

Fig. 1 eine Vorrichtung zum Bestimmen des Längsprofils eines Kanalrohres zwischen zwei Kanalschächten; und die
Fig. 2 bis 5 in Diagrammen Messergebnisse.

In einem Fahrzeug 1 ist eine Schlauchkassette 2 mit einem Schlauchvorrat für den Messschlauch 3 von beispielsweise 250 m oder 60 m vorgesehen. An dem einen Ende des Messschlauches 3, das im Ausführungsbeispiel bereits in einem Kanal 4 angeordnet ist, ist eine Messsonde 5 befestigt. Das andere Ende des über eine Haspel 6 geführten Messschlauches 3 endet in einem Ausgleichsbehälter 7, der oben mit einer Entlüftungsschraube 8 versehen ist. Neben dem Ausgleichsbehälter 7 ist eine Messeinrichtung 9, in welcher der Drucksensor für das Bestimmen des Atmosphärendruckes (Luftdruck) und ein Rechner für das Auswerten der Meßdaten für den hydrostatischen Druck, den Atmosphärendruck und die Temperatur untergebracht sind, vorgesehen. Die Meßeinrichtung 9 enthält auch verschiedene Bedienungsschalter, Anzeigeeinrichtungen (Displays) und Steuereinrichtungen, die z.B. die Abstände zwischen den Meßpunkten festlegen.

Das Bewegen des Meßschlauches 3, um die Mess-Sonde 5 von Messstelle zu Messstelle durch den Kanal 4 zu bewegen, kann durch Drehen der Schlauchkassette (-haspel) 6 von Hand aus oder mit Hilfe eines Motors erfolgen. Um das Bewegen des Messschlauches 3 zu erleichtern, ist eine von Hand aus betätigbare und/oder motorangetriebene Vorschubeinrichtung 10 vorgesehen, der auch eine Einrichtung zum Messen der vor- bzw. zurückgezogenen Länge des Mess-Schlauches 3 zugeordnet sein kann. Der Messschlauch 3 läuft über Umlenkrollen 11,12 und 13 bis zur Sohle 14 des Kanals 4 und bis zur Messsonde 5.

In der Messsonde 5 ist in deren Längsmitte ein Drucksensor und an deren vorderem Ende ein Temperatursensor untergebracht, wobei die Kabel für die Datenübertragung durch den Messschlauch 3 laufen. Beim Verwenden der beschriebenen Vorrichtung werden bei jedem Messpunkt folgende Werte erfasst:
- atmosphärischer Druck,
- Druck der Flüssigkeitsäule vom Ausgleichsbehälter auf den Drucksensor in der Messsonde,
- Temperatur im Drucksensor,
- Temperatur der Flüssigkeit,
- Temperatur der Luft und
- die Länge des gesamten Schlauchpaketes (beispielsweise 250 m oder 60 m).

Diese Meßwerte werden durch das Rechenprogramm zur Berechnung des Messergebnisses herangezogen.

Mit dem beschriebenen Verfahren der Erfindung und mit Hilfe der ebenfalls beschriebenen, erfindungsgemäßen Vorrichtung kann der Höhen-Verlauf (das Längsprofil) eines Rohres 4 zwischen zwei Schächten 23 une 24 ermittelt werden.

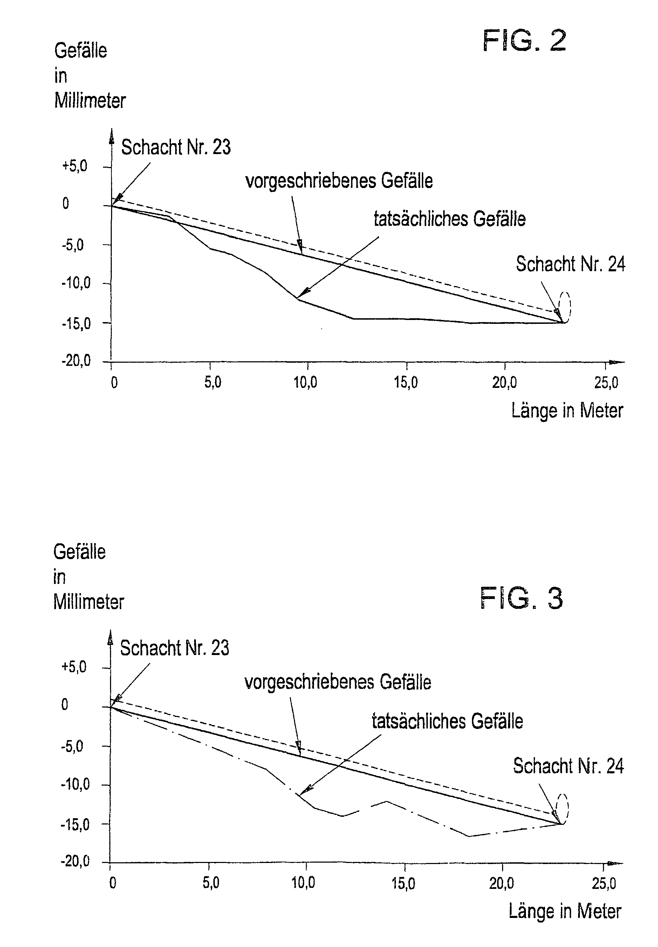

Das Ergebnis einer solchen Bestimmung des Längsprofiles ist in den Diagrammen der Fig. 2 bis 5 wiedergegeben. Das Diagramm von Fig. 2 gibt das Ergebnis der ersten Messung (Bestandsaufnahme) wieder. Die Verlegeposition - das Gefälle - eines Rohres zwischen zwei Schächten (Schacht Nr. 23 und Schacht Nr. 24) ist vorgeschrieben und in dem Diagramm mit der Linie "vorgeschriebenes Gefälle" eingetragen. Das "tatsächliche Gefälle" des Rohres weicht so gut wie immer vom "vorgeschriebenen Gefälle" ab, wobei die Abweichung in einem Toleranzbereich liegen kann. Durch Aufnahme des "tatsächlichen Gefälles" mit der erfindungsgemäßen Vorrichtung und dem erfindungsgemäßen Verfahren kann dieses und damit die Abweichung vom "vorgeschriebenen Gefälle" punktweise ermittelt werden. Mit der Bestandsaufnahme ist die Verlegeposition (Linie "tatsächliches Gefälle") eines Rohres (genau der Rohrsohle des Rohres) zum Zeitpunkt der ersten Messung festgehalten.

Fig. 3 zeigt das Ergebnis der ersten, einige Monate nach der ersten Bestimmung des Längsprofils vorgenommenen Vergleichsmessung. Das Ergebnis dieser Vergleichsmessung zeigt, dass sich durch Bewegungen im Erdbereich eine Verlegeposition des Rohres geändert hat. So kann die Veränderung der Lage des Rohres ermittelt werden. Die bei der ersten Vergleichsmessung ermittelte Lage des Rohres (dessen Längsprofil) ist durch die strich-punktierte Linie "tatsächliches Gefälle" in Fig. 3 wiedergegeben.

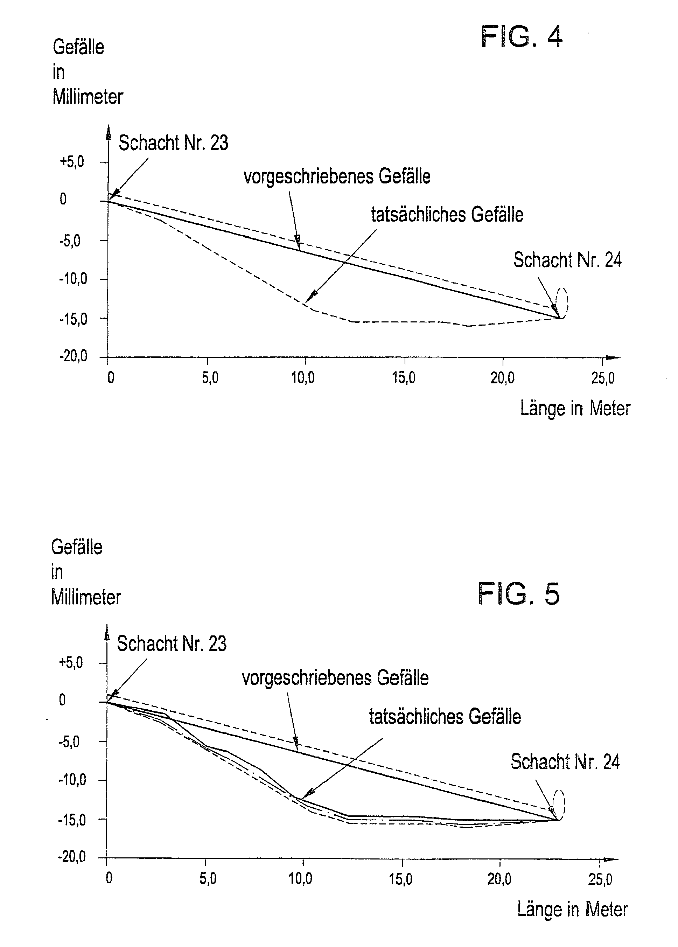

Um zu zeigen, wie genau das erfindungsgemäße Verfahren arbeitet, wurde eine zweite, einige Monate nach der ersten Vergleichsmessung vorgenommenen Vergleichsmessung durchgeführt, deren Ergebnis in Fig. 4 (strichlierte Linie "tatsächliches Gefälle") wiedergegeben ist.

In Fig. 5 ist ein grafischer Vergleich der drei Diagramme der Fig. 2 bis 4 wiedergegeben. So ist das Setzungsverhalten genau zu ermitteln und es können unter Einbeziehung des Zeitfaktors, dem zeitlichen Abstand, in dem die Vergleichsmessungen stattgefunden haben, Rückschlüsse auf die Dynamik der Erdbewegungen gezogen werden.

Mit der beschriebenen Vorrichtung zum Bestimmen von Längsprofilen von Bauwerken kann auch ein System zur Dokumentation des Ortes und der Zeit der durchgeführten Messung kombiniert werden. Dies kann beispielsweise dadurch erfolgen, dass mit dem Rechenprogramm eine GPS-Vorrichtung und eine Echtzeituhr kombiniert werden.

Im Rahmen der Erfindung kann eine große Genauigkeit der Messungen von Druck und Temperatur erreicht werden, wenn in der Messsonde ein Drucksensor mit integriertem Temperatursensor verwendet wird.

Die erfassten Messwerte werden über eine serielle Datenleitung, die den (kombinierten) Druck-Temperatur-Sensor auch mit Energie versorgt, an den Rechner weitergeleitet. Über die Datenleitung können zusätzlich zu dem Wert für den gemessenen Druck auch die Temperatur des Sensors, der Sensortyp und die Sensornummer mitübertragen werden. So ist es möglich, den angeschlossenen Sensor durch den Rechner automatisch zu erkennen. Der Umgebungsluftdruck, der auf die an ihrem oberen Ende offene Flüssigkeitssäule (Ausgleichsgefäß) wirkt, wird durch den Umgebungsdruck-Sensor erfaßt und rechnerisch im Rechner berücksichtigt, wenn der vom Drucksensor erfaßte hydrostatische Druck zum Ermitteln des Höhenabstandes zwischen Meßpunkt und Referenzpunkt ausgewertet wird.

Die Dichte der verwendeten Flüssigkeit im Messschlauch zum Zeitpunkt der Messung und die von der Messsonde sowie von dem den Luftdruck erfassenden Druckmesser empfangenen Daten werden durch Zeit und Datum der eingebauten Echtzeituhr sowie den Koordinaten des integrierten GPS-Systems in einem RAM-Speicher im Rechner abgelegt. Über eine Schnittstelle können diese Daten über einen PC ausgelesen und ausgewertet werden.

Von Vorteil ist es, wenn jede Messung für die spätere Auswertung mit einer individuellen Kennung für Projekt und Ort gekennzeichnet wird. Dies ist beispielsweise mit Hilfe des integrierten GPS-Systems und der integrierten Echtzeituhr möglich.

Das erfindungsgemäße Verfahren und die erfindungsgemäße Vorrichtung erlauben folgende, beispielhaft genannten Einsatzmöglichkeiten:

Der genaue Gefällsverlauf von Kanalrohren nach der Verschüttung des Rohrgrabens im Zuge der Bauabnahme kann ermittelt werden. Damit ist eine objektiv dokumentierte Beurteilung der Verlegequalität möglich. Bauchbildungen in den Rohrleitungen können festgestellt und innerhalb der Gewährleistungsfrist behoben werden. So können spätere Funktionsstörungen, die zusätzlichen Pflege- und Instandhaltungsaufwand verursachen, verhindert werden.

Das Gefälle von Drainagesystemen in Mülldeponien kann exakt vermessen und damit sein Funktionszustand überprüft werden. Schlecht funktionierende Drainagesysteme können zu erheblichen Untergrundkontaminationen führen. Die Stabilität des Untergrundes und dessen genaue Beobachtung erlauben eine höhere Aufschüttung der Mülldeponie, wenn es zu keinem Absenken des Terrains und Gefährdung der Drainagen kommt. Höhere Aufschüttung spart kostbare Deponiefläche und im Grenzfall die Anlage einer neuen Deponie. Die gleichzeitige Messung der Temperatur lässt Rückschlüsse auf die Vergasung und sonstiger Reaktionen innerhalb des Müllkörpers zu.

Die Setzung von Erddämmen, Baukörpern von Strassen und Eisenbahnen können frühzeitig erkannt werden, da diese Setzungen im Untergrund nachgewiesen werden können, bevor sichtbare Auswirkungen an der Oberfläche auftreten. Eine Früherkennung von Sicherheitsrisken kann Schäden vorbeugen bzw. vermeiden helfen.

Hangrutschungen können durch Kontrollmessungen frühzeitig erkannt werden, da sich eine Erdbewegung im Untergrund abzeichnet, bevor die ersten Anzeichen an der Oberfläche sichtbar werden.

Bei dem erfindungsgemäßen Verfahren wird mit einer gegen den Umgebungsluftdruck offenen Referenzfläche gearbeitet. Auf diese Weise werden durch die automatisch ebene und beispielsweise bis zu 400-fach größere Referenzfläche als die Querschnittsfläche des Mess-schlauches Dehnungen des Schlauchpaketes praktisch eliminiert, so daß diese nicht berücksichtigt werden müssen.

Bei der erfindungsgemäßen Vorrichtung und bei dem erfindungsgemäßen Verfahren werden der Umgebungsluftdruck mit einem separaten Drucksensor ermittelt und Beeinflussen des Umgebungsluftdruckes auf das Messergebnis wird rechnerisch kompensiert.

Bei der erfindungsgemäßen Vorrichtung und bei dem erfindungsgemäßen Verfahren kann der Messkopf bis zu 400 m von der Bedienungsperson, die sich in der Regel am Messwagen aufhalten wird, entfernt angeordnet sein. Der Messkopf ist durch eine vorzugsweise im Mess-schlauch geführte Datenleitung mit dem Auswertegerät verbunden.

Mit dem erfindungsgemäßen Verfahren und der erfindungsgemäßen Vorrichtung können entsprechende Drucksensoren vorausgesetzt, auch sehr große Höhenunterschiede (theoretisch bis zum Bersten des verwendeten Messschlauches) erfaßt werden. Die Einflüsse von Temperaturunterschieden werden bei dem erfindungsgemäßen Verfahren und der erfindungsgemäßen Vorrichtung durch getrennte Temperatursensoren, die einerseits im Messkopf und anderseits im Bereich des Schlauchpaktes angeordnet sind, bei jedem Messvorgang in jedem Messpunkt kompensiert.

Durch das weiter oben beschriebene Kalibrieren wird die absolute Genauigkeit der nach dem erfindungsgemäßen Verfahren und/oder unter Verwendung der erfindungsgemäßen Vorrichtung durchgeführten Messungen sichergestellt.

Zusammenfassend kann ein Ausführungsbeispiel der Erfindung wie folgt dargestellt werden:

Zum Bestimmen des Längsprofiles von Rohrleitungen wird der hydrostatische Druck einer Flüssigkeitssäule zwischen jedem von über die Länge der Rohrleitung verteilten Messpunkten und einem Referenzpunkt erfasst und aus den erfassten Werten der Höhenabstand jedes Messpunktes vom Referenzpunkt errechnet. Zum Ausführen dieses Verfahren wird ein mit Flüssigkeit gefüllter Mess-Schlauch 3 verwendet, der am unteren Ende einen Drucksensor zum Erfassen des hydrostatischen Druckes aufweist, und der an seinem obere Ende mit einem Ausgleichsgefäß 7 für die Messflüssigkeit verbunden ist. Im Bereich des Ausgleichsgefäßes 7 ist ein Drucksensor 9 zum Erfassen des Luftdruckes vorgesehen. Der herrschende Luftdruck und die herrschende Temperatur, die gesondert erfasst wird, und die Dichte der Messflüssigkeit beeinflusst, werden beim Auswerten der erfaßten Werte für den hydrostatischen Druck berücksichtigt. Für jeden Messvorgang wird die Position des Messsystems und der Zeitpunkt des Messvorganges über GPS erfasst und registriert.

## Patentansprüche

1. Verfahren zum Bestimmen des Längsprofiles von langgestreckten Bauwerken, insbesondere im Erdreich verlegten Bauwerken, wie Rohren u.dgl., bei dem man den Höhenabstand des Bauwerkes von einem Referenzpunkt an mehreren, über die Länge des Bauwerkes verteilten Messpunkten erfasst, indem man an jedem Messpunkt den hydrostatischen Druck einer Flüssigkeitssäule zwischen dem jeweiligen Messpunkt und dem Referenzpunkt erfasst und aus dem erfassten Wert für den hydrostatischen Druck den Höhenabstand des jeweiligen Messpunktes vom Referenzpunkt errechnet, **dadurch gekennzeichnet, dass** man den hydrostatischen Druck einer an ihrem oberen Ende offenen Flüssigkeitssäule misst, wobei das obere Ende der Flüssigkeitssäule den Referenzpunkt bildet, und dass man bei der Berechnung des Höhenabstandes aus den gemessenen Werten des hydrostatischen Drucks den im Zeitpunkt der Messung gesondert erfassten Luftdruck und die gesondert erfasste Temperatur der hydrostatischen Flüssigkeit berücksichtigt.

2. Verfahren nach Anspruch 1, **dadurch gekennzeichnet, dass** man die Temperatur der Flüssigkeitssäule sowohl am Messpunkt als auch am Referenzpunkt erfasst.

3. Verfahren nach Anspruch 1 oder 2, **dadurch gekennzeichnet, dass** man das untere Ende der Flüssigkeitssäule schrittweise von Messpunkt zu Messpunkt bewegt.

4. Verfahren nach Anspruch 3, **dadurch gekennzeichnet, dass** man nach dem Weiterbewegen des unteren Endes der Flüssigkeitssäule zu dem nächsten Messpunkt vor der nächsten Messung des hydrostatischen Drucks zuwartet, bis sich die Flüssigkeitssäule beruhigt hat.

5. Verfahren nach einem der Ansprüche 1 bis 4, **dadurch gekennzeichnet, dass** man den Zeitpunkt jeder Messung erfasst.

6. Verfahren nach einem der Ansprüche 1 bis 5, **dadurch gekennzeichnet, dass** man den Ort jeder Messung erfasst.

7. Verfahren nach einem der Ansprüche 1 bis 6, **dadurch gekennzeichnet, dass** man die Druck- und Temperatursensoren vor dem Beginn einer Messung justiert.

8. Verfahren nach einem der Ansprüche 1 bis 7, **dadurch gekennzeichnet, daß** eine Messflüssigkeit verwendet wird, deren Dichte sich mit ändernder Temperatur linear ändert.

9. Verfahren nach Anspruch 8, **dadurch gekennzeichnet, daß** als Messflüssigkeit Wasser verwendet wird, dem zum Senken des Gefrierpunktes ein Gefrierschutzmittel zugesetzt ist.

10. Vorrichtung zum Bestimmen des Längsprofils von langgestreckten Bauwerken, insbesondere zum Durchführen des Verfahrens nach einem der Ansprüche 1 bis 9, mit einem mit einer Messflüssigkeit gefüllten Messschlauch (3), der am unteren Ende einen Drucksensor, der in einer am unteren Ende des Messschlauches (3), vorgesehenen Messsonde (5) eingebaut ist, aufweist, wobei das obere Ende des Schlauches (3) mit einem Ausgleichsgefäß (7) für die Messflüssigkeit verbunden ist, **dadurch gekennzeichnet, dass** im Bereich des offenen Ausgleichsgefäßes (7) ein Sensor (9) zum Erfassen des Luftdruckes vorgesehen ist, und dass wenigstens in der Messsonde (5) ein die Temperatur der Messflüssigkeit erfassender Sensor eingebaut ist.

11. Vorrichtung nach Anspruch 10, **dadurch gekennzeichnet, dass** im Bereich des Ausgleichsgefäßes (7) ein die Temperatur der Messflüssigkeit erfassender Sensor vorgesehen ist.

12. Vorrichtung nach Anspruch 10 oder 11, **dadurch gekennzeichnet, dass** die Messsonde (5) durch eine am Messchlauch (3) angreifende Vorschubeinrichtung (10) schrittweise von Messpunkt zu Messpunkt bewegbar ist.

13. Vorrichtung nach einem der Ansprüche 10 bis 12, **dadurch gekennzeichnet, dass** eine Uhr, insbesondere eine Echtzeituhr, zum Erfassen des Zeitpunktes jeder Messung vorgesehen ist.

14. Vorrichtung nach einem der Ansprüche 10 bis 13, **dadurch gekennzeichnet, dass** eine GPS-Einrichtung zum Erfassen des Ortes jeder Messung vorgesehen ist.

15. Vorrichtung nach einem der Ansprüche 10 bis 14, **dadurch gekennzeichnet, dass** die Leitungen für das Weiterleiten der vom Drucksensor und vom Temperatursensor an der Messsonde (5) erfassten Daten im Inneren des Messschlauches (3) geführt sind.

16. Vorrichtung nach einem der Ansprüche 10 bis 15, **dadurch gekennzeichnet, dass** das Ausgleichsgefäß (7) eine Entlüftungsschraube (8) aufweist.

17. Vorrichtung nach einem der Ansprüche 10 bis 16, **dadurch gekennzeichnet, dass** auf einer Schlauchhaspel (6) ein Vorrat an Mess-Schlauch (3) mit vorgegebener Länge aufgewickelt ist.

18. Vorrichtung nach einem der Ansprüche 10 bis 17, **dadurch gekennzeichnet, dass** eine motorisch und/oder von Hand aus angetriebene vorschubeinrichtung (10) zum Bewegen des Schlauches (3) vorgesehen ist.

19. Vorrichtung nach einem der Ansprüche 10 bis 18, **dadurch gekennzeichnet, dass** dem Messschlauch (3) eine Längenmessvorrichtung zum Erfassen des Verschiebeweges des Schlauches (3) und damit der Messsonde (5) zugeordnet ist.

20. Vorrichtung nach einem der Ansprüche 10 bis 19, **dadurch gekennzeichnet, dass** ein Rechner vorgesehen ist, in den die erfassten Daten für hydrostatischen Druck, Temperaturen und atmosphärischen Luftdruck sowie gegebenenfalls zeit und Ort der Messung eingegeben werden, und mit dem der Höhenabstand zwischen dem jeweiligen Messpunkt und dem durch das Ausgleichsgefäß (7) gebildeten Referenzpunkt errechnet wird.

## Claims

1. Method for determining the longitudinal profile of extended constructions, in particular constructions laid in the ground, such as pipes and the like, in which the vertical distance of the construction from a reference point is detected at a plurality of measuring points which are distributed over the length of the construction, in that at each measuring point the hydrostatic pressure of a liquid column between the respective measuring point and the reference point is detected and, from the detected value for the hydrostatic pressure, the vertical distance of the respective measuring point from the reference point is calculated, **characterised in that** the hydrostatic pressure of a liquid column which is open at its upper end is measured, the upper end of the liquid column forming the reference point and **in that**, when calculating the vertical distance from the measured values of the hydrostatic pressure, the air pressure detected separately at the time of the measurement and the separately detected temperature of the hydrostatic liquid are taken into account.

2. Method according to claim 1, **characterised in that** the temperature of the liquid column is detected both at the measuring point and at the reference point.

3. Method according to claim 1 or 2, **characterised in that** the lower end of the liquid column moves in steps from measuring point to measuring point.

4. Method according to claim 3, **characterised in that**, after further movement of the lower end of the liquid column to the next measuring point before the next measurement of the hydrostatic pressure, the liquid column is left to settle.

5. Method according to one of the claims 1 to 4, **characterised in that** the time of each measurement is detected.

6. Method according to one of the claims 1 to 5, **characterised in that** the location of each measurement is detected.

7. Method according to one of the claims 1 to 6, **characterised in that** the pressure and temperature sensors are adjusted before the beginning of a measurement.

8. Method according to one of the claims 1 to 7, **characterised in that** a measuring liquid is used, the density of which changes linearly with changing temperature.

9. Method according to claim 8, **characterised in that** water to which an anti-freezing agent is added to lower the freezing point is used as measuring liquid.

10. Device for determining the longitudinal profile of extended constructions, in particular for implementing the method according to one of the claims 1 to 9, having a measuring hose (3) filled with a measuring liquid, said measuring hose having, at the lower end, a pressure sensor which is incorporated in a measuring probe (5) provided at the lower end of the measuring hose (3), the upper end of the hose (3) being connected to an equalisation vessel (7) for the measuring liquid, **characterised in that** a sensor (9) for detecting the air pressure is provided in the region of the open equalisation vessel (7), and **in that** a sensor which detects the temperature of the measuring liquid is incorporated at least in the measuring probe (5).

11. Device according to claim 10, **characterised in that** a sensor which detects the temperature of the measuring liquid is provided in the region of the equalisation vessel (7).

12. Device according to claim 10 or 11, **characterised in that** the measuring probe (5) is moveable in steps from measuring point to measuring point by means of a feed device (10) which engages on the measuring hose (3).

13. Device according to one of the claims 10 to 12, **characterised in that** a clock, in particular a real time clock, is provided for detecting the time of each measurement.

14. Device according to one of the claims 10 to 13, **characterised in that** a GPS device for detecting the location of each measurement is provided.

15. Device according to one of the claims 10 to 14, **characterised in that** the lines for transmitting the data which are detected by the pressure sensor and by the temperature sensor on the measuring probe (5) are guided in the interior of the measuring hose (3).

16. Device according to one of the claims 10 to 15, **characterised in that** the equalisation vessel (7) has a vent screw (8).

17. Device according to one of the claims 10 to 16, **characterised in that** a supply of measuring hose (3) with a prescribed length is wound up on a hose reel (6).

18. Device according to one of the claims 10 to 17, **characterised in that** a feed device (10) which is actuated by motor and/or by hand is provided for moving the hose (3).

19. Device according to one of the claims 10 to 18, **characterised in that** a length measuring device is assigned to the measuring hose (3) in order to detect the displacement path of the hose (3) and hence of the measuring probe (5).

20. Device according to one of the claims 10 to 19, **characterised in that** a computer is provided into which the detected data for hydrostatic pressure, temperatures and atmospheric air pressure and also if necessary time and location of the measurement are input, and with which the vertical distance between the respective measuring point and the reference point formed by the equalisation vessel (7) is calculated.

## Revendications

1. Procédé de détermination du profil longitudinal de constructions à extension longitudinale, en particulier de constructions enfouies dans la terre, telles que des tubes et analogues, dans lequel on enregistre la hauteur de la construction à partir d'un point de référence au niveau de plusieurs points de mesure répartis sur la longueur de la construction, en enregistrant au niveau de chaque point de mesure la pression hydrostatique d'une colonne de liquide entre le point de mesure respectif et le point de référence et en calculant, à partir de la valeur enregistrée pour la pression hydrostatique, la hauteur du point de mesure respectif par rapport au point de référence,
**caractérisé en ce qu'**on mesure la pression hydrostatique d'une colonne de liquide ouverte au niveau de son extrémité supérieure, l'extrémité supérieure de la colonne de liquide formant le point de référence, et
lors du calcul de la hauteur à partir des valeurs mesurées de la pression hydrostatique, on prend en compte la pression d'air enregistrée séparément au moment de la mesure et la température du liquide hydrostatique enregistrée séparément.

2. Procédé selon la revendication 1,
**caractérisé en ce qu'**on enregistre la température de la colonne de liquide à la fois au niveau du point de mesure et au niveau du point de référence.

3. Procédé selon la revendication 1 ou 2,
**caractérisé en ce qu'**on déplace l'extrémité inférieure de la colonne de liquide par étapes, de point de mesure en point de mesure.

4. Procédé selon la revendication 3,
**caractérisé en ce qu'**après le déplacement de l'extrémité inférieure de la colonne de liquide jusqu'au prochain point de mesure, avant la prochaine mesure de la pression hydrostatique, on attend que la colonne de liquide se soit stabilisée.

5. Procédé selon l'une des revendications 1 à 4,
**caractérisé en ce qu'**on enregistre le moment de chaque mesure.

6. Procédé selon l'une des revendications 1 à 5,
**caractérisé en ce qu'**on enregistre le lieu de chaque mesure.

7. Procédé selon l'une des revendications 1 à 6,
**caractérisé en ce qu'**on ajuste les capteurs de température et de pression avant le début d'une mesure.

8. Procédé selon l'une des revendications 1 à 7,
**caractérisé en ce qu'**on utilise un liquide de mesure dont la densité varie linéairement lorsque la température varie.

9. Procédé selon la revendication 8,
**caractérisé en ce qu'**on utilise en tant que liquide de mesure de l'eau à laquelle on ajoute un antigel pour abaisser le point de congélation.

10. Dispositif de détermination du profil longitudinal de constructions à extension longitudinale, en particulier pour mettre en oeuvre le procédé selon l'une des revendications 1 à 9, comprenant un tuyau de mesure (3) rempli d'un liquide de mesure, qui présente au niveau de son extrémité inférieure un capteur de pression intégré dans une sonde de mesure (5) prévue au niveau de l'extrémité inférieure du tuyau de mesure (3), l'extrémité supérieure du tuyau (3) étant reliée à un vase d'expansion (7) pour le liquide de mesure,
**caractérisé en ce que** dans la zone du vase d'expansion ouvert (7), on prévoit un capteur (9) pour enregistrer la pression d'air, et
au moins dans la sonde de mesure (5), on intègre un capteur enregistrant la température du liquide de mesure.

11. Dispositif selon la revendication 10,
**caractérisé en ce que** dans la zone du vase d'expansion (7), on prévoit un capteur enregistrant la température du liquide de mesure.

12. Dispositif selon la revendication 10 ou 11,
**caractérisé en ce que** la sonde de mesure (5) est mobile par étapes de point de mesure en point de mesure par un dispositif d'avance (10) rattaché au tuyau de mesure (3).

13. Dispositif selon l'une des revendications 10 à 12,
**caractérisé en ce qu'**on prévoit une horloge, en particulier une horloge en temps réel, pour enregistrer le moment de chaque mesure.

14. Dispositif selon l'une des revendications 10 à 13,
**caractérisé en ce qu'**on prévoit un dispositif GPS pour enregistrer le lieu de chaque mesure.

15. Dispositif selon l'une des revendications 10 à 14,
**caractérisé en ce que** les lignes destinées à transmettre les données enregistrées par le capteur de pression et par le capteur de température au niveau de la sonde de mesure (5) sont guidées à l'intérieur du tuyau de mesure (3).

16. Dispositif selon l'une des revendications 10 à 15,
**caractérisé en ce que** le vase d'expansion (7) présente une vis de purge (8).

17. Dispositif selon l'une des revendications 10 à 16,
**caractérisé en ce qu'**une réserve de tuyau de mesure (3) ayant une longueur prédéterminée est enroulée sur un dévidoir de tuyau (6).

18. Dispositif selon l'une des revendications 10 à 17,
**caractérisé en ce qu'**on prévoit un dispositif d'avance (10) motorisé et/ou à entraînement manuel pour déplacer le tuyau (3).

19. Dispositif selon l'une des revendications 10 à 18,
**caractérisé en ce qu'**on associe au tuyau de mesure (3) un dispositif de mesure de longueur pour enregistrer le trajet de déplacement du tuyau (3) et ainsi de la sonde de mesure (5).

20. Dispositif selon l'une des revendications 10 à 19,
**caractérisé en ce qu'**on prévoit un calculateur dans lequel sont entrées les données enregistrées pour la pression hydrostatique, les températures et la pression d'air atmosphérique ainsi que, le cas échéant, l'heure et le lieu de la mesure, et avec lequel on calcule la hauteur entre le point de mesure respectif et le point de référence formé par le vase d'expansion (7).
